# FASCICULE DE BREVET EUROPEEN

(11) **EP 2 365 862 B1**
(45) Date de publication et mention de la délivrance du brevet: **04.03.2015**
(21) Numéro de dépôt: 09804139.5
(22) Date de dépôt: 27.11.2009
(51) Int. Cl.: B01D 53/14, B01D 53/18

(54) **DISPOSITIF ET PROCEDE POUR LE TRAITEMENT ET LA COMPRESSION DES GAZ**
VORRICHTUNG UND VERFAHREN ZUR BEHANDLUNG UND ZUM KOMPRIMIEREN VON GAS
DEVICE AND METHOD FOR TREATMENT AND COMPRESSION OF GAS

(30) Priorité: 20.11.2008 FR 0806498
(43) Date de publication de la demande: 21.09.2011
(73) Titulaire: Total Raffinage France, 92400 Courbevoie (FR)
(72) Inventeur: SENEGAS, Marie-Andrée, F-27450 Saint Etienne l'Allier (FR); CHARRIERE, Michel, F-76620 Le Havre (FR)
(74) Mandataire: Largeau, Béatrice
(86) Numéro de dépôt international: PCT/FR2009/052326
(87) Numéro de publication internationale: WO 2010/058145

(56) Documents cités:
- BE-A- 727 810
- DE-A1- 2 740 039
- JP-A- 4 131 121
- JP-A- 7 051 534
- US-A1- 2005 072 300
- US-B1- 6 284 023

## Description

La présente invention concerne le domaine du traitement des gaz par lavage, à partir d'un flux liquide, et la compression simultanée de ces mêmes gaz.

Plus précisément, la présente invention concerne un dispositif de type compact pour le lavage et la compression des gaz et un procédé pour la mise en oeuvre d'un tel dispositif.

La présente invention se rapporte plus particulièrement à un dispositif compact et son procédé associé pour la désulfuration d'un gaz par lavage à partir d'un solvant chimique et à la compression simultanée de ce gaz.

C'est à cette application que l'on se référera dans la suite de la présente description, mais le dispositif et le procédé de mise en oeuvre d'un tel dispositif, objets de la présente invention, s'appliquent à tout type de traitement de gaz par lavage à partir d'un fluide liquide, ledit traitement ayant également une fonction simultanée de compression dudit gaz.

Dans une raffinerie, une distillation sous vide (DSV) du pétrole brut rejette, pendant son fonctionnement, des gaz acides de craquage incondensables, dénommés dans la profession gaz résiduaires (« off-gas »), et contenant de fortes quantités d'hydrogène sulfuré (H₂S). L'H₂S, dont la concentration peut atteindre plusieurs dizaines de pourcents poids dans les gaz acides, est réputé mortel à forte teneur et peut être générateur de toxicité aigue et/ou chronique pour les êtres vivants et notamment l'homme.

Ces dégagements gazeux acides, qui proviennent généralement de la décomposition d'une fraction de la charge hydrocarbonée lors de son traitement par craquage thermique, présentent des débits importants de l'ordre de plusieurs tonnes par heure et une concentration en H₂S pouvant atteindre 30 % poids, voire supérieure à 30% poids.

Il est donc impératif d'éliminer en tout ou partie cette forte quantité d'H₂S. Dans l'art antérieur, ces gaz résiduaires sont brûlés dans un four, par exemple le four de l'unité intégrant la DSV, afin de récupérer l'énergie disponible. Le four doit être équipé de brûleur(s) spécifique(s) car les gaz résiduaires étant produits à très basse pression, il est impératif d'éviter des éventuels retours de flamme en direction du procédé situé en amont du four.

Malheureusement, cette combustion provoque des émissions non maîtrisées de dioxyde de soufre (SO₂) résultant de la combustion de l'H₂S. Or, le SO₂ est un gaz irritant pour l'homme qui peut agir en synergie avec d'autres polluants, notamment les particules. Des symptômes comme la toux, une diminution de la capacité pulmonaire et une aggravation des maladies pulmonaires et cardio-vasculaires lui sont notamment attribués.

Dans l'atmosphère, le SO₂ peut être transformé principalement en acide sulfurique qui se dépose au sol et sur la végétation. Cet acide contribue, en association avec d'autres polluants, à l'acidification et à l'appauvrissement des milieux naturels et participe aussi à la détérioration des matériaux utilisés dans la construction des bâtiments (pierre, métaux, ...).

De nouvelles exigences environnementales ont donc été édictées et, notamment au 1^{er} janvier 2010, le rejet total de SO₂ dans les fumées de l'ensemble d'une plateforme de raffinage de devra pas dépasser le flux journalier correspondant à une concentration moyenne journalière de 1000 mg/Nm³ (exprimée en SO₂) et un flux annuel correspondant à une concentration moyenne annuelle de 850mg/Nm³ (Normaux mètre cube). Ces exigences environnementales vont nécessiter l'extraction de l'H₂S avant la combustion de ces gaz résiduaires pour réduire et minimiser, in fine, les émissions de SO₂. Ceci étant d'autant plus sensible que les « bulles SO₂ », c'est-à-dire les quantités totales d'hydrogène sulfuré émises au-dessus d'une installation industrielle, sont, dès maintenant, de plus en plus surveillées par les pouvoirs publics.

En effet, et en ce qui concerne notamment une raffinerie de pétrole, les émissions de dioxyde de soufre sont réglementées selon ce concept de bulle, c'est-à-dire que la valeur limite d'émission de SO₂ prescrite s'applique à l'ensemble des émissions du site et non à chaque émissaire, comme c'est le cas pour d'autres activités.

L'extraction de l'H₂S, préalablement à la combustion du gaz qui le contient, peut être réalisé dans une colonne dite à absorption, encore appelée « absorbeur », munie de plateaux ou emplie de garnissage, par lavage à contrecourant du gaz acide avec un solvant chimique, notamment une solution aqueuse d'amine, telle la N-méthyldiéthanolamine (MDEA), la mono ou diéthanolamine (MEA ou DEA) ou encore la diisopropylamine (DIPA), dans laquelle l'hydrogène sulfuré est chimiquement absorbé par des réactions tendant vers l'équilibre. La DEA, amine secondaire de formule brute NH(CH₂CH₂OH)₂, possède une affinité particulière pour l'hydrogène sulfuré (H₂S), ainsi que pour le dioxyde de carbone (CO₂). Elle est largement utilisée dans les traitements actuels de l'H₂S par colonne d'absorption dans les installations industrielles, notamment les raffineries.

Moins corrosive que la MEA, la DEA peut être employée à des concentrations de 20 à 50 % en poids dans l'eau et ne forme pas de produits de dégradation en présence de sulfure de carbonyle (COS) que l'on peut rencontrer dans les produits pétroliers. Le solvant riche, chargé en H₂S est continuellement régénéré. A la suite de cette régénération, il est appelé solvant pauvre, c'est-à-dire sans, ou à très faible teneur en H₂S, pour être réutilisé vers une nouvelle phase de lavage, alors que l'H₂S extrait est envoyé vers une unité de soufre pour être transformé en soufre commercialisable, par exemple en fleur de soufre.

La mise en oeuvre des solutions aqueuses d'amine pour la désulfuration des gaz acides dans des colonnes d'absorption est un procédé dont les brevets ont plus de 20 ans et qui sont donc maintenant dans le domaine public.

D'autres solvants peuvent être utilisés en lieu et place de la DEA pour absorber l'H₂S, comme l'hexaméthyl phosphorotriamide ou la pipérazine tel qu'indiqué respectivement dans FR 2 382 921 et FR 2 332 049, mais la DEA demeure l'amine la plus utilisée.

US2005072300 décrit la désacidification d'un gaz par passage dans un contacteur co-courant gaz-liquide permettant un mélange turbulent et ensuite dans une colonne d'absorption.

Cette technologie par colonne à absorption à partir d'un solvant chimique fonctionne correctement et est couramment utilisée. Cependant, elle présente un certain nombre d'inconvénients, parmi lesquels :

### a) Pression importante de l'H₂S

En effet, suivant le principe de Le Chatelier, l'absorption de l'H₂S par la DEA est favorisée par une augmentation de la pression à l'intérieur de la colonne (par exemple 5 bars de pression constante dans toute la colonne). La pression de gaz résiduaires à la sortie de la distillation sous vide étant de l'ordre de 1 bar, il est alors nécessaire pour obtenir un rendement correct à la réaction chimique, de compresser le gaz acide en amont de la colonne à l'aide, par exemple, d'un équipement de type compresseur à gaz et plus spécifiquement compresseur pour gaz contenant de l'H₂S. Cet équipement lourd demande donc un investissement de départ important et un suivi continu pour son entretien et son bon fonctionnement.

En plus du compresseur à gaz, il subsiste la nécessité de disposer d'un matériel important, encombrant et onéreux, telle la colonne d'absorption de plus de 10 mètres de hauteur, la nécessité de transporter le gaz chargé en H₂S en réseau car l'unité d'extraction de l'H₂S regroupant la colonne d'absorption, ainsi que le régénérateur du solvant chimique, n'est généralement pas disponible au plus près de la source d'émission du gaz acide.

### b) Rendement insuffisant et brûleur particulier

Pour palier au manque de pression de gaz résiduaires dans la colonne d'absorption est apparu un fonctionnement de ladite colonne à basse pression, évitant ainsi la compression amont des gaz acides issus de la distillation sous vide et alimentant la colonne.

Si le coût d'investissement d'une telle solution est diminué par rapport à une installation fonctionnant à pression élevée, il est obligatoire d'utiliser un brûleur particulier pour pouvoir brûler le gaz, non complètement débarrassé de son H₂S, dans un four, entraînant de facto, une baisse du rendement du four préjudiciable au bon fonctionnement de l'unité, donc préjudiciable également à l'exploitant. De plus, un impact négatif est possible sur la valeur du vide de la distillation en cas d'augmentation de la perte de charge entre le ballon de sortie, dit de garde, et le four.

### c) Risque durant le transport

La colonne à absorption et son régénérateur de solvant chimique étant situés à une distance qui peut être de l'ordre de plusieurs centaines de mètres, de la distillation sous vide et donc du lieu de production de gaz résiduaires, un danger potentiel existe lors du transport du gaz contenant des fortes teneurs en H₂S, sous forme d'un risque de rupture de la canalisation d'alimentation en gaz résiduaires.

C'est ce transport de gaz acide vers son lieu de traitement qui accroit le cercle de danger de l'unité, c'est-à-dire l'étendue d'une zone à risques liée à ladite unité.

Le but de la présente invention vise à remédier en tout ou partie à ces inconvénients afin de permettre le traitement d'un fluide gazeux, par exemple la désulfuration d'un gaz acide, par lavage à partir d'un fluide liquide dans un ensemble monobloc de faibles dimensions, regroupant les différentes fonctions indispensables à ce traitement, telles que la compression, l'absorption, la réfrigération et la finition. Le traitement peut être effectué in-situ, c'est-à-dire, grâce aux faibles dimensions du dispositif, être disponible au plus près de la source du fluide gazeux, avec des distances de transports des gaz acides minimalisées. Le dispositif, objet de la présente invention, fonctionnant à forte pression, eu égard au principe de Le Chatelier ci-dessus indiqué, il présente une bonne efficacité d'absorption, sans compresseur alternatif, sans colonne d'absorption et par conséquent et in fine, avec un coût moins élevé que celui correspondant à la solution classique de l'art antérieur.

Selon un de ses aspects, l'invention a pour objet un dispositif pour le traitement et la compression en continu d'au moins un fluide gazeux par contact avec au moins un fluide liquide, caractérisé en ce qu'il comprend :
- un hydroéjecteur alimenté simultanément en au moins un fluide gazeux et au moins un fluide liquide sous pression dont la sortie est connectée à une capacité dite de séparation,
- une capacité de séparation des deux fluides disposant en partie supérieure d'une sortie pour l'évacuation du fluide gazeux,
- un échangeur de chaleur disposé en partie basse à l'intérieur de la capacité de séparation,
- une pompe alimentée par le fluide liquide en sortie de l'échangeur, ladite pompe étant connectée sur le circuit d'alimentation de l'hydroéjecteur et l'alimentant au moins en partie en fluide liquide,
- une purge pour alimenter un régénérateur en une partie du fluide liquide, disposée en aval de la pompe,
- une colonne de finition du traitement du gaz disposée sur la sortie du fluide gazeux et connectée sur la capacité de séparation, et
- une ligne d'évacuation du fluide gazeux traité disposée en partie haute de la colonne.

En particulier, la colonne de finition est directement connectée sur la capacité de séparation et elle comporte au moins une rampe de distribution de fluide liquide permettant un lavage liquide-gaz sans plateau ni garnissage.

L'hydroéjecteur est un dispositif qui fonctionne comme un éjecteur dans lequel la vapeur habituellement utilisée pour produire la pression est remplacée par un fluide liquide sous pression, par exemple un solvant chimique contenant une amine secondaire, notamment de la DEA, diluée dans de l'eau à une teneur comprise entre 10 et 50 % en poids, et de préférence entre 15 % et 30 % en poids par rapport au poids total de la solution.

A l'intérieur de l'hydroéjecteur, le fluide liquide traverse une buse avant de pénétrer dans la chambre de mélange. Au passage de cette buse, le liquide acquiert une vitesse très élevée, qui crée une dépression stable à l'origine de l'aspiration d'au moins un fluide gazeux, tel qu'un gaz combustible contenant de l'H₂S.

Dans la chambre de mélange de l'hydroéjecteur, il se produit un contact, notamment supersonique, entre les fluides gazeux et liquide, permettant au mélange de se renforcer dans la zone dite de haute turbulence de l'hydroéjecteur, avant d'être ensuite éjecté à forte pression par l'extrémité de sortie du mélange gaz-liquide de l'hydroéjecteur, encore appelé diffuseur.

Avantageusement l'hydroéjecteur présente une longueur de 3 à 4 mètres et un diamètre de 0,2 mètre à 0,5 mètre. Il est ainsi moins encombrant qu'une colonne d'absorption de plus de 10 mètres de hauteur et d'un demi-mètre de diamètre. Cependant, son principal avantage réside dans le fait qu'il remplace à la fois le compresseur alternatif de gaz et ladite colonne d'absorption.

L'hydroéjecteur est par exemple commercialisé par la société Hijet International.

Les dimensions de la capacité de séparation, qui contient la quantité nécessaire en fluide liquide chargé en DEA pour faire fonctionner le dispositif en continu sont, par exemple, une longueur de 6,50 mètres et un diamètre de 1,50 mètres.

C'est dans cette capacité que les fluides gazeux et liquide se séparent, le liquide tombant en partie basse de ladite capacité et le gaz, non absorbé par le fluide liquide, s'évacuant en partie haute à l'intérieur d'une colonne de finition.

A l'intérieur et intégré dans cette capacité, est disposé un échangeur de chaleur, notamment un échangeur de chaleur à eau, en particulier de type à baïonnette, par exemple disposé dans la partie basse de la capacité pour refroidir le fluide liquide car la réaction chimique avec la DEA au niveau de l'hydroéjecteur est exothermique.

Avantageusement, cet échangeur à baïonnette est principalement constitué d'un faisceau de tubes insérés dans une virole et muni de chicanes afin de ne pas créer de chemins préférentiels dans la capacité au détriment du transfert de chaleur.

Le fluide liquide passe par les chicanes et ressort en fond de calandre.

Avantageusement, cette configuration permet d'obtenir une réduction de l'emprise au sol, la suppression de la calandre habituelle pour les échangeurs, ainsi que l'instrumentation et la robinetterie associées à un tel échangeur.

Une pompe, de type centrifuge, permet d'accroître la pression du fluide liquide aspiré en sortie de l'échangeur et refoulé sous haute pression vers le circuit d'alimentation de l'hydroéjecteur.

Une purge de la phase liquide, disposée de préférence en aval de la pompe centrifuge de circulation, permet de prélever en continu une quantité de fluide liquide et d'envoyer ledit fluide vers un ensemble de régénération, par exemple pour régénérer la DEA chargée en H₂S qu'il contient.

Une colonne de finition connectée et disposée en partie haute de la capacité de séparation, permet de réaliser un dernier lavage du fluide gazeux. On utilise pour ce lavage le solvant chimique constitué essentiellement d'amine pauvre (DEA), c'est-à-dire propre ou régénéré, donc débarrassé de son H₂S, en provenance du régénérateur.

L'amine pauvre est distribuée par au moins une rampe indépendante permettant d'arroser plus de 50% de la capacité par l'intermédiaire d'au moins un pulvérisateur permettant un lavage par échange liquide-gaz sans plateau ni garnissage. Ce pulvérisateur est par exemple un pulvérisateur à cône plein.

Un matelas coalesceur peut être disposé en partie supérieure de la colonne de finition, par exemple afin de coalescer les éventuelles gouttelettes du fluide liquide entraînées par le gaz, notamment pour fabriquer des plus grosses gouttelettes qui peuvent ainsi retomber dans la capacité de séparation.

Avantageusement l'ensemble du dispositif, par ses faibles dimensions, peut être installé au plus près de la source de gaz acides, permettant de supprimer les circuits de transport de ces gaz acides, limitant de facto, les cercles de danger de l'installation.

En cas d'arrêt de la pompe de circulation du fluide liquide, une sécurité peut envoyer le gaz à la torche pour conserver la DSV en fonctionnement sans perte de vide. Si l'arrêt est long, la nature de la charge de la distillation sous vide peut être modifiée en basculant sur une charge basse teneur en soufre afin de limiter pendant cet arrêt les émissions de SO₂ dans les fours.

Selon un second aspect, l'invention concerne un procédé pour le traitement et la compression en continu d'un fluide gazeux par contact avec un fluide liquide sous pression, caractérisé en ce que l'on effectue successivement les opérations suivantes :
- mise en contact des deux fluides gazeux et liquide dans un hydroéjecteur,
- séparation du fluide gazeux résiduel non absorbé par le fluide liquide dans une capacité de séparation,
- traitement complémentaire du fluide gazeux dans une colonne de finition disposée à la sortie de ladite capacité,
- maintien en température du fluide liquide par l'intermédiaire d'un échangeur de chaleur disposé dans ladite capacité de séparation,
- compression du fluide liquide en sortie de l'échangeur, et
- régénération d'une partie du fluide liquide.

Cette colonne de finition est directement connectée à la capacité et comporte au moins une rampe de distribution de fluide liquide permettant un lavage liquide-gaz sans plateau ni garnissage.

Les paramètres tels que la température, la pression et le débit, de la mise en contact des deux fluides gazeux et liquide dans un hydroéjecteur, en remplacement d'une colonne d'absorption, sont ajustables et dépendent du débit massique du fluide à comprimer.

Bien entendu, le procédé peut être mis en oeuvre avec le dispositif selon l'invention.

Le gaz peut contenir plusieurs dizaines de % poids d'H₂S, notamment de 20 à 60 % en poids, en particulier de 30 à 40 % en poids par rapport au poids total du gaz.

L'hydroéjecteur permet d'augmenter la pression du gaz et de mettre ledit gaz, qui peut contenir plusieurs dizaines de % poids d'H₂S, en contact intime avec le fluide liquide, par exemple une solution aqueuse de DEA contenant entre 10 % et 50 % poids et de préférence entre 15 % et 30 % poids de cette amine, comme peut le faire les plateaux ou le garnissage d'une colonne à absorption.

Le choix de la pression en sortie hydroéjecteur, par exemple comprise entre 2 et 8 bars, voire de 5 à 7 bars, peut être lié au rendement de l'absorption et aussi, in fine, à la pression d'utilisation aval du fluide gazeux traité, par exemple pour alimenter un réseau gaz d'une raffinerie de pétrole.

La nécessité de disposer d'une pression de plusieurs bars à la sortie du dispositif impose une pression importante au fluide liquide à l'entrée de l'hydroéjecteur.

L'énergie de compression du fluide liquide est assurée par une pompe centrifuge permettant au fluide liquide de la capacité de séparation, en aval de l'échangeur de type baïonnette, d'alimenter l'hydroéjecteur sous forte pression, par exemple entre 10 et 50 bars.

La température du fluide liquide contenant l'amine secondaire dans la capacité de séparation est ajustée par l'échangeur de chaleur de type à baïonnette et peut varier de 10°C à 50°C et de préférence, de 15°C à 40°C.

Le fluide gazeux non absorbé par le fluide liquide peut être séparé de ce dernier dans la capacité de séparation dont le volume compris entre 10 minutes et 20 minutes de rétention liquide (« hold-up ») (volume de liquide pompé pendant 10 et 20 minutes) permet d'assurer une bonne séparation liquide-gaz ; la qualité de cette séparation limitant d'autant la présence d'éventuelles émulsions.

Le fluide gazeux, une fois séparé, reçoit un traitement complémentaire dans la colonne de finition, pour atteindre les spécifications souhaitées concernant sa teneur en H₂S.

Le fluide liquide propre, c'est-à-dire neuf ou régénéré, alimente au moins une buse de pulvérisation disposée dans ladite colonne de finition et dirigeant ledit liquide vers le gaz montant dans la colonne. Un matelas coalesceur, disposé en aval des buses permet d'éliminer les gouttelettes d'amines entraînées.

Passé ce matelas coalesceur, le gaz traité qui ne contient pratiquement plus d'H₂S car ayant subi un double lavage (1-dans l'hydroéjecteur, 2-dans la colonne de finition) est à la pression requise et donc évacué pour être, par exemple, mélangé au réseau gaz de la raffinerie.

C'est ainsi que l'on peut atteindre des concentrations inférieures à 50 ppm d'H₂S dans le gaz en sortie du dispositif, objet de la présente invention.

Une adaptation des dimensions de la colonne de finition, par exemple pour recevoir un plus grand nombre de buses de pulvérisation, peut être envisagée pour obtenir, in fine, des teneurs en H₂S plus faibles que la valeur ci-dessus indiquée.

La phase liquide contenant la DEA se chargeant en H₂S au cours du fonctionnement du dispositif, une opération de régénération de cette DEA devient indispensable pour des raisons d'économies relatives à l'achat d'un solvant chimique neuf.

C'est par exemple 10 % de cette phase liquide qui est envoyée, en continu, à une unité de régénération de la DEA classique, connue de l'homme du métier, ces 10 % étant réinjectés, après régénération, dans le circuit du dispositif au niveau du traitement de finition par l'intermédiaire d'au moins un pulvérisateur dans la colonne de finition.

Le dispositif objet de la présente invention étant insérable au point d'émission du gaz à traiter, il permet d'améliorer la sécurité en réduisant le risque inhérent à celui de la rupture d'une canalisation d'un gaz chargé en élément toxique, notamment l'H₂S (c'est la réduction du cercle de danger d'une installation industrielle encore définie par la zone où la probabilité d'un risque létal pourrait être observé en cas d'occurrence d'un incident).

Une réduction du coût du traitement du gaz acide, une combustion améliorée par la suppression d'un brûleur spécifique à ce type de gaz acide, une fiabilité améliorée par le remplacement d'un compresseur par une pompe centrifuge, une minimisation des émissions fatales de SO₂ dans l'atmosphère, sont autant d'avantages proposés par la présente invention.

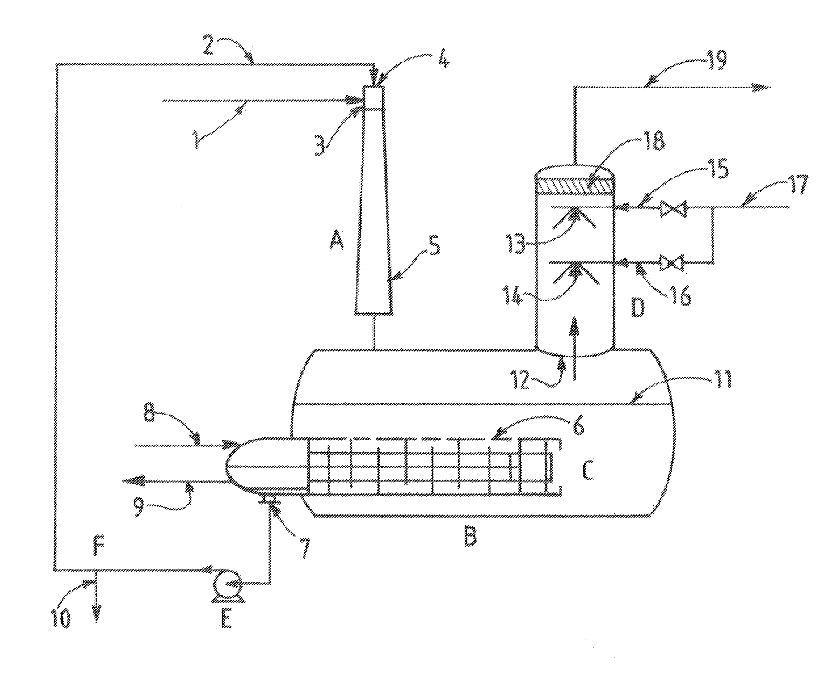

L'invention est maintenant décrite en référence au dessin annexé, non limitatif, dans lequel la figure 1 est une représentation schématique du dispositif selon l'invention appliqué par exemple à la désulfuration d'un gaz incondensable issu d'une distillation sous vide du pétrole (gaz résiduaires).

C'est l'H₂S, dont la teneur dans le gaz résiduaire peut atteindre plusieurs dizaine de % m/m, qui est séparé dudit gaz résiduaire par le dispositif et procédé objets de la présente invention.

Sur la figure 1, le dispositif est constitué de :
- un hydroéjecteur (A)
- une capacité de séparation (B),
- un échangeur de type baïonnette (C),
- une colonne de finition (D),
- une pompe centrifuge (E), et
- une purge (F).

Les gaz résiduaires chargés en H₂S en provenance de la distillation sous vide du pétrole brut arrivent par la canalisation (1) et entrent dans l'hydroéjecteur au niveau de la chambre de mélange (3).

Le fluide liquide ou solvant chimique, par exemple un mélange constitué d'une amine secondaire, par exemple la DEA, à une concentration de 25 % poids dans l'eau, arrive par la ligne (2) et entre sous pression dans la buse de l'hydroéjecteur (4)

La longueur hors tout de l'hydroéjecteur est comprise entre 3 et 4 mètres.

Après mélange des fluides gazeux et liquide à l'intérieur de l'hydroéjecteur, ledit mélange ressort par le diffuseur (5) de l'hydroéjecteur et arrive directement dans la capacité de séparation (B)

Dans cette capacité, dont la longueur varie entre 5 et 10 m et son diamètre entre 1 et 2 m, l'amine chargée en H₂S passe dans les chicanes (6) de l'échangeur de chaleur et ressort en partie basse (7) de l'échangeur.

L'échangeur est alimenté en liquide de refroidissement respectivement par les entrée (8) et sortie (9).

Une pompe centrifuge E aspire le fluide liquide pour le refouler dans l'hydroéjecteur par la ligne 2.

Une purge (F) du circuit du solvant chimique permet d'envoyer par la ligne (10) une partie de ce solvant (par exemple 10 % en volume) à un régénérateur pour éliminer l'H₂S absorbé qu'il contient.

Dans la capacité de séparation B, le volume de gaz limité par le niveau de l'amine passe directement dans la colonne de finition (D) par la sortie 12

La colonne de finition dont la hauteur peut varier de 2 à 3 mètres est constituée par deux pulvérisateurs (13 et 14) disposés à l'intérieur de celle-ci et alimentés individuellement en phase liquide pauvre, c'est-à-dire contenant le solvant chimique neuf ou régénéré, respectivement par les lignes (15 et 16) à partir d'une arrivée commune (17).

Un matelas coalesceur (18) disposé en aval des pulvérisateurs permet de coalescer et retenir les éventuelles gouttes d'amines.

Le gaz débarrassé de son H₂S sort par la ligne (19).

### Exemple

Un gaz incondensable en provenance d'une distillation sous vide de pétrole brut (gaz résiduaire) contient jusqu'à 35 % poids d'H₂S.

Il est traité dans le dispositif conforme à la présente invention, dans lequel :
1/ l'hydroéjecteur est du type hydraulique liquide vertical,
   Ses dimensions sont :
   - hauteur 3,0 mètres,
   - diamètre 0,25 mètre
   Le diffuseur de l'hydroéjecteur est relié à la capacité de séparation par une canalisation de 0,25 mètre de diamètre.
2/ la capacité de séparation a les dimensions suivantes :
   - longueur 6,5 mètres,
   - diamètre 1,5 mètre,
   soit une capacité d'environ 11 m³, contenant 60 % volume de fluide liquide et 40 % volume de gaz.
3/ l'échangeur de chaleur situé dans la capacité de séparation est défini comme indiqué ci-dessous :
   - longueur 4 mètres,
   - contenant 500 tubes de 1,905 cm (¾ de pouce), soit 120 m² de surface d'échanges de chaleur,
   - Charge : 0,23 MKcal/h correspondant à la quantité de chaleur extraite par l'eau de réfrigération au liquide en circulation,
   - U : 670 kcal/h.m²°C, correspondant au coefficient global de transfert de chaleur,
   - Dimension : 3/4" - 4m correspondant respectivement au diamètre et à la longueur de chaque tube de l'échangeur de chaleur,
   - Débit CW : 200T/h correspondant au débit horaire de l'eau de réfrigération dans l'échangeur de chaleur,
4/ La pompe de circulation et compression du fluide liquide à une puissance de 200kw et un delta p de 41 bars, correspondant à l'augmentation de pression fournie au débit du fluide liquide traversant la pompe, par la puissance mise en jeu.
5/ La colonne de finition à une longueur de 2,75 mètres et un diamètre de 51 centimètres.
   Les deux pulvérisateurs sont alimentés à l'identique en phase liquide pauvre provenant de la régénération de la DEA, à raison de 5T/h et contenant 25% de DEA
6/ Le matelas coalesceur situé dans la partie supérieure de la colonne est destiné à coalescer les gouttelettes d'amines afin qu'elles retombent dans la capacité de séparation.

Les différentes valeurs et paramètres des flux sont rassemblés dans le tableau 1 ci-dessous.

Ces valeurs sont affectées aux flux gazeux et liquides repérés par les chiffres et lettres ci-dessous référencés sur le schéma 1 ci-dessous.

**Tableau 1 : Valeurs et paramètres des flux gazeux et liquide dans le dispositif et procédé objets de la présente invention.**

| | | **Fluide gazeux** | | | | **Fluide liquide** | | |
|---|---|---|---|---|---|---|---|---|
| | | **Incondensable de DSV** | | | | **Amine (DEA) dans eau** | | |
| | | **1** | **2** | **3** | | **A** | **B** | **C** |
| | | **Gaz à traiter** | **Sortie hydroéjecteur** | **Gaz traité** | | **Fluide liquide** | **Purge** | **Fluide liquide régénéré** |
| **Débit (T/h)** | | 1,1 | 0,76 | 0,76 | | 120 | 10,4 | 10 |
| **% H2S (% poids)** | | 35 | 2,03 | 0,002 | | 3,75 | 3,74 | 0 |
| **Débit H2S (kg/h)** | | 390 | 15,5 | 0,015 | | | | |
| **% DEA** | | | | | | 25 | | 25 |
| **% H2S absorbé** | | 0 | **96** | **99,9** | | | | |
| **Pression (bars)** | | 1 | 6 | 6 | | 41 | 41 | 41 |

Avec le dispositif et procédé objets de l'invention, plus de 99,9 % de l'H₂S a été absorbé.

Le dispositif étant de faible encombrement (Longueur 6,50 m, largeur 2,0 m et hauteur 4,5 m, soit une emprise au sol de 13 m², il peut être situé au plus près de la source de production des gaz acides, par exemple dans une raffinerie, à côté des condenseurs de tête, à l'étage au dessus du ballon de garde.

La combustion du fluide gazeux, éventuellement en mélange, à la pression du réseau gaz, permet de supprimer les brûleurs spéciaux type H₂S et leur environnement de sécurité (arrête flamme, réseau spécialisé) et permet un meilleur contrôle de la combustion.

## Revendications

1. Dispositif pour le traitement et la compression en continu d'au moins un fluide gazeux par contact avec au moins un fluide liquide, **caractérisé en ce qu'**il comprend :
- un hydroéjecteur (A) alimenté simultanément en au moins un fluide gazeux et au moins un fluide liquide sous pression dont la sortie est connectée à une capacité dite de séparation,
- une capacité de séparation (B) des deux fluides disposant en partie supérieure d'une sortie pour l'évacuation du fluide gazeux,
- un échangeur de chaleur (C) disposé en partie basse à l'intérieur de la capacité de séparation,
- une pompe (E) alimentée par le fluide liquide en sortie de l'échangeur, ladite pompe étant connectée sur le circuit d'alimentation de l'hydroéjecteur et l'alimentant au moins en partie en fluide liquide,
- une purge (F) pour alimenter un régénérateur en une partie du fluide liquide, disposée en aval de la pompe,
- une colonne de finition (D) du traitement du gaz disposée sur la sortie du fluide gazeux et directement connectée sur la capacité de séparation, ladite colonne comportant au moins une rampe de distribution de fluide liquide permettant un lavage liquide-gaz sans plateau ni garnissage, et
- une ligne d'évacuation du fluide gazeux traité disposée en partie haute de la colonne.

2. Dispositif suivant la revendication 1, **caractérisé en ce que** l'échangeur de chaleur est du type à baïonnette.

3. Dispositif selon l'une quelconque des revendications précédentes, **caractérisé en ce qu'**au moins un pulvérisateur à cône plein est disposé dans la colonne de finition.

4. Dispositif selon la revendication 3, **caractérisé en ce que** le pulvérisateur est agencé de manière à arroser plus de 50 % de la capacité de la colonne de finition.

5. Dispositif selon l'une quelconque des revendications précédentes, **caractérisé en ce qu'**un matelas coalesceur est disposé en partie supérieure de la colonne de finition.

6. Procédé pour le traitement et la compression en continu d'un fluide gazeux par contact avec un fluide liquide sous pression, **caractérisé en ce que** l'on effectue successivement les opérations suivantes :
- mise en contact des deux fluides gazeux et liquide dans un hydroéjecteur,
- séparation du fluide gazeux résiduel non absorbé par le fluide liquide dans une capacité de séparation,
- traitement complémentaire du fluide gazeux dans une colonne de finition disposée à la sortie de ladite capacité, directement connectée à cette dernière, ladite colonne comportant au moins une rampe de distribution de fluide liquide permettant un lavage liquide-gaz sans plateau ni garnissage,
- maintien en température du fluide liquide par l'intermédiaire d'un échangeur de chaleur disposé dans ladite capacité de séparation,
- compression du fluide liquide en sortie de l'échangeur, et
- régénération d'une partie du fluide liquide.

7. Procédé selon la revendication 6, **caractérisé en ce que** la pression en sortie de l'hydroéjecteur est comprise entre 2 et 8 bars et de préférence entre 5 et 7 bars.

8. Procédé suivant l'une quelconque des revendications 6 ou 7, **caractérisé en ce que** la pression du fluide liquide est comprise entre 10 et 50 bars.

9. Utilisation du dispositif selon l'une quelconque des revendications 1 à 5 ou du procédé selon l'une quelconque des revendications 6 à 8 pour extraire l'H₂S d'un gaz combustible.

10. Utilisation selon la revendication 9
**caractérisé en ce que** la teneur en H₂S dans le fluide gazeux est comprise entre 20 et 60 % poids et de préférence entre 30 et 40 % poids.

11. Utilisation suivant la revendication 9 ou 10 **caractérisé en ce que** le fluide liquide contient une amine secondaire.

12. Utilisation selon la revendication 11, **caractérisé en ce que** l'amine secondaire est la DEA.

13. Utilisation selon la revendication 11 ou 12, **caractérisé en ce que** la concentration en amine secondaire dans le fluide liquide varie entre 10 et 50 % en poids et de préférence entre 15 et 30 % en poids par rapport au poids total de la solution.

## Patentansprüche

1. Vorrichtung zum kontinuierlichen Behandeln und Komprimieren zumindest eines gasförmigen Fluids durch Kontakt mit zumindest einem flüssigen Fluid,
**dadurch gekennzeichnet, dass** sie enthält:
- einen Hydroejektor (A), der gleichzeitig von zumindest einem gasförmigen Fluid und zumindest einem flüssigen Fluid unter Druck gespeist wird und dessen Ausgang mit einem Raum verbunden ist, der "zur Trennung" genannt wird,
- einen Raum (B) zur Trennung der zwei Fluide, der an einem oberen Abschnitt über einen Ausgang zum Auslassen des gasförmigen Fluids verfügt,
- einen Wärmetauscher (C), der in einem unteren Abschnitt im Inneren des Raums zur Trennung angeordnet ist,
- eine Pumpe (E), die von dem flüssigen Fluid am Ausgang des Tauschers gespeist wird, wobei die Pumpe mit dem Speisungskreis des Hydroejektors verbunden ist und ihn zumindest teilweise mit dem flüssigen Fluid speist,
- einen Ablass (F) zum Speisen eines Regenerators mit einem Teil des flüssigen Fluids, der stromabwärts der Pumpe angeordnet ist,
- eine Endbearbeitungssäule (D) zur Behandlung des Gases, die über dem Auslass des gasförmigen Fluids angeordnet ist und direkt mit dem Raum zur Trennung verbunden ist, wobei die Säule zumindest eine Verteilungsrampe des flüssigen Fluids enthält, die eine Spülung Flüssigkeit-Gas ohne Plateau oder Besatz ermöglicht, und
- eine Leitung zum Ableiten des behandelten gasförmigen Fluids, die an einem oberen Abschnitt der Säule angeordnet ist.

2. Vorrichtung gemäß Anspruch 1, **dadurch gekennzeichnet, dass** der Wärmetauscher vom Bajonetttyp ist.

3. Vorrichtung gemäß einem der vorigen Ansprüche, **dadurch gekennzeichnet, dass** zumindest ein Zerstäuber mit Vollkonus in der Endbearbeitungssäule angeordnet ist.

4. Vorrichtung gemäß Anspruch 3, **dadurch gekennzeichnet, dass** der Zerstäuber mehr als 50 % des Volumens der Endbearbeitungssäule besprengt.

5. Vorrichtung gemäß einem der vorigen Ansprüche, **dadurch gekennzeichnet, dass** eine Coalescer-Matte in dem oberen Abschnitt der Endbearbeitungssäule angebracht ist.

6. Verfahren zum kontinuierlichen Behandeln und Komprimieren zumindest eines gasförmigen Fluids durch Kontakt mit zumindest einem flüssigen Fluid unter Druck,
**dadurch gekennzeichnet, dass** aufeinanderfolgend die folgenden Vorgänge durchgeführt werden:
- In-Kontakt-Bringen der zwei Fluide, des gasförmigen und des flüssigen, in einem Hydroejektor,
- Trennen des restlichen gasförmigen Fluids, das nicht von dem flüssigen Fluid absorbiert wurde, in einem Raum zum Trennen,
- ergänzendes Behandeln des gasförmigen Fluids in einer Endbearbeitungssäule, die an dem Ausgang des Raums angeordnet ist, wobei die Säule zumindest eine Verteilungsrampe des flüssigen Fluids enthält, die eine Spülung Flüssigkeit-Gas ohne Plateau oder Besatz ermöglicht,
- Erhalten der Temperatur des flüssigen Fluids mittels eines Wärmetauschers, der in dem Raum zum Trennen angeordnet ist,
- Komprimieren des flüssigen Fluids am Ausgang des Tauschers und
- Regenerieren eines Teils des flüssigen Fluids.

7. Verfahren gemäß Anspruch 6, **dadurch gekennzeichnet, dass** der Druck am Ausgang des Hydroejektors zwischen 2 und 8 bar liegt und vorzugsweise zwischen 5 und 7 bar.

8. Verfahren gemäß einem der Ansprüche 6 oder 7, **dadurch gekennzeichnet, dass** der Druck des flüssigen Fluids zwischen 10 und 50 bar liegt.

9. Verwenden der Vorrichtung gemäß einem der Ansprüche 1 bis 5 oder des Verfahrens gemäß einem der Ansprüche 6 bis 8 zum Extrahieren von H₂S aus einem brennbaren Gas.

10. Verwendung gemäß Anspruch 9, **dadurch gekennzeichnet, dass** der Gehalt an H₂S in dem brennbaren Gas zwischen 20 und 60 Gew.-% liegt und vorzugsweise zwischen 30 und 40 Gew.-%.

11. Verwendung gemäß Anspruch 9 oder 10, **dadurch gekennzeichnet, dass** das flüssige Fluid ein sekundäres Amin enthält.

12. Verwendung gemäß Anspruch 11, **dadurch gekennzeichnet, dass** das sekundäre Amin das DEA ist.

13. Verwendung gemäß Anspruch 11 oder 12, **dadurch gekennzeichnet, dass** die Konzentration des sekundären Amins in dem flüssigen Fluid zwischen 10 und 50 Gew.-% und vorzugsweise zwischen 15 und 30 Gew.-% mit Bezug auf das Gesamtgewicht der Lösung variiert.

## Claims

1. Device for treating and continuously compressing at least one gaseous fluid by contact with at least one liquid fluid, **characterized in that** it comprises:
- a hydro-ejector (A) simultaneously fed with at least one gaseous fluid and at least one pressurized liquid fluid, the outlet of which is connected to a separator vessel,
- a separator vessel (B) for separating the two fluids having, in the upper part, an outlet for discharging the gaseous fluid,
- a heat exchanger (C) positioned in the lower part inside the separator vessel,
- a pump (E) fed by the liquid fluid leaving the exchanger, said pump being connected to the feed circuit of the hydro-ejector and feeding it, at least partly, with liquid fluid,
- a purge (F) for feeding a regenerator with a portion of the liquid fluid, positioned downstream of the pump,
- a finishing column (D) for treating the gas positioned at the outlet of the gaseous fluid and directly connected to the separator vessel, said column comprising at least one liquid fluid manifold enabling liquid-gas scrubbing without plates or packing, and
- a line for discharging the treated gaseous fluid positioned in the upper part of the column.

2. Device according to Claim 1, **characterized in that** the heat exchanger is of bayonet type.

3. Device according to either one of the preceding claims, **characterized in that** at least one full cone sprayer is positioned in the finishing column.

4. Device according to Claim 3, **characterized in that** the sprayer is arranged so as to spray more than 50% of the capacity of the finishing column.

5. Device according to any one of the preceding claims, **characterized in that** a coalescer pad is positioned in the upper part of the finishing column.

6. Process for treating and continuously compressing a gaseous fluid by contact with a pressurized liquid fluid, **characterized in that** the following operations are successively carried out:
- bringing of the two gaseous and liquid fluids into contact in a hydro-ejector,
- separation of the residual gaseous fluid not absorbed by the liquid fluid in a separator vessel,
- additional treatment of the gaseous fluid in a finishing column positioned at the outlet of said vessel, directly connected to the latter, said column comprising at least one liquid fluid manifold that enables liquid-gas scrubbing without plates or packing,
- temperature maintenance of the liquid fluid by means of a heat exchanger positioned in said separator vessel,
- compression of the liquid fluid at the outlet of the exchanger, and
- regeneration of a portion of the liquid fluid.

7. Process according to Claim 6, **characterized in that** the pressure at the outlet of the hydro-ejector is between 2 and 8 bar and preferably between 5 and 7 bar.

8. Process according to either one of Claims 6 and 7, **characterized in that** the pressure of the liquid fluid is between 10 and 50 bar.

9. Use of the device according to any one of Claims 1 to 5 or of the process according to any one of Claims 6 to 8 for extracting H₂S from a fuel gas.

10. Use according to Claim 9, **characterized in that** the content of H₂S in the gaseous fluid is between 20% and 60% by weight and preferably between 30% and 40% by weight.

11. Use according to Claim 9 or 10, **characterized in that** the liquid fluid contains a secondary amine.

12. Use according to Claim 11, **characterized in that** the secondary amine is DEA.

13. Use according to Claim 11 or 12, **characterized in that** the concentration of secondary amine in the liquid fluid varies between 10% and 50% by weight and preferably between 15% and 30% by weight relative to the total weight of the solution.
